# EUROPEAN PATENT APPLICATION

(11) **EP 4 611 417 A1**
(43) Date of publication of application: **03.09.2025**
(21) Application number: 23895705.4
(22) Date of filing: 07.03.2023
(51) Int. Cl.: H04W 24/00

(54) **TRANSMISSION INFORMATION ANALYSIS METHODS AND APPARATUSES, DEVICE AND STORAGE MEDIUM**

(30) Priority: 03.12.2022 CN 202211544282
(71) Applicant: GUANGDONG OPPO MOBILE TELECOMMUNICATIONS CORP., LTD., Dongguan, Guangdong 523860 (CN)
(72) Inventor: CHEN, Jingran, Dongguan, Guangdong 523860 (CN)
(74) Representative: Novagraaf Technologies
(86) International application number: PCT/CN2023/079994
(87) International publication number: WO 2024/113530

(57) **Abstract**

The present application relates to the field of communications. Disclosed are transmission information analysis methods and apparatuses, a device and a storage medium. One method comprises: receiving an analysis request sent by a first network element, the analysis request being used for requesting to analyze terminal device UE transmission information; and sending an analysis result to the first network element, the analysis result comprising the UE transmission information. An NWDAF interacts with the first network element regarding the analysis request and the analysis result, so as to achieve analysis of the UE transmission information.

## Description

The present disclosure claims the priority to Patent Application No. 202211544282.2 filed on December 3, 2022 and entitled "TRANSMISSION INFORMATION ANALYSIS METHODS AND APPARATUSES, DEVICE AND STORAGE MEDIUM", the disclosure of which is herein incorporated by reference in its entirety.

### TECHNICAL FIELD

The present disclosure relates to the field of communications, and in particular, relates to a method and an apparatus for analyzing transmission information, and a device and a storage medium thereof.

### BACKGROUND

In the related art, a core network element, as a part of a service-oriented architecture, is capable of providing services related to a network data analytics function (NWDAF). The NWDAF is capable of acquiring data from other core network elements, network management systems, and the like, and performing big data statistics, analytics, or intelligent data analytics to derive an analytics result or predicted data on a network side, thereby assisting core network elements to perform a more effective control on user equipment (UE) access based on the data analytics result or predicted data.

However, there is still no solution regarding how the core network generates a prediction of transmission information of a terminal device.

### SUMMARY

Embodiments of the present disclosure provide a method and an apparatus for analyzing transmission information, and a device and a storage medium thereof. The technical solutions are as follows:

According to some embodiments of the present disclosure, a method for analyzing transmission information is provided. The method includes:
receiving an analytics request from a first network element, wherein the analytics request is used for requesting to analyze UE transmission information of a terminal device; and
transmitting an analytics result to the first network element, wherein the analytics result includes the UE transmission information.

According to some embodiments of the present disclosure, a method for analyzing transmission information is provided. The method includes:
transmitting an analytics request to an NWDAF, wherein the analytics request is used for requesting to analyze UE transmission information of a terminal device; and
receiving an analytics result from the NWDAF, wherein the analytics result includes the UE transmission information.

According to some embodiments of the present disclosure, an apparatus for analyzing transmission information is provided. The apparatus includes:
a first receiving module, configured to receive an analytics request from a first network element, wherein the analytics request is used for requesting to analyze UE transmission information; and
a first transmitting module, configured to transmit an analytics result to the first network element, wherein the analytics result includes the UE transmission information.

According to some embodiments of the present disclosure, an apparatus for analyzing transmission information is provided. The apparatus includes:
a second transmitting module, configured to transmit an analytics request to an NWDAF, wherein the analytics request is used for requesting to analyze UE transmission information; and
a second receiving module, configured to receive an analytics result from the NWDAF, wherein the analytics result includes the UE transmission information.

According to some embodiments of the present disclosure, a communication device is provided. The communication device includes: a processor; a transceiver, communicably connected to the processor; and a memory, configured to store one or more executable instructions. The processor, when loading and executing the one or more executable instructions, is caused to perform the method for analyzing the transmission information as described above.

According to some embodiments of the present disclosure, a computer-readable storage medium is provided. The computer-readable storage medium stores one or more executable instructions. The one or more executable instructions, when loaded and executed by a processor, cause the processor to perform the method for analyzing the transmission information as described above.

According to some embodiments of the present disclosure, a computer program product is provided. The computer program product includes one or more computer instructions stored in a computer-readable storage medium. The one or more computer instructions, when read from the computer-readable storage medium and loaded and executed by a processor of a computer device, cause the computer device to perform the method for analyzing the transmission information as described above.

According to some embodiments of the present disclosure, a chip including one or more programmable logic circuits and/or one or more program instructions is provided. The chip, when running, is caused to perform the method for analyzing the transmission information as described above.

According to some embodiments of the present disclosure, a computer program is provided. The computer program includes one or more computer instructions. The one or more computer instructions, when loaded and executed by a processor of a computer device, cause the computer device to perform the method for analyzing the transmission information as described above.

The technical solutions according to the embodiments of the present disclosure achieve at least the following beneficial effects.

An NWDAF interacts with the first network element regarding the analytics request and the analytics result, such that analytics of the UE transmission information is achieved.

### BRIEF DESCRIPTION OF THE DRAWINGS

For clearer descriptions of the technical solutions according to embodiments of the present disclosure, the accompanying drawings required for describing the embodiments are briefly introduced hereinafter. Apparently, the accompanying drawings in the following description show merely some embodiments of the present disclosure, and those of ordinary skill in the art may still derive other drawings from these accompanying drawings without creative efforts.
FIG. 1 is a schematic diagram of federated learning in the related art;
FIG. 2 is a schematic diagram of a network architecture in the related art;
FIG. 3 is a schematic diagram of a network architecture in the related art;
FIG. 4 is a schematic diagram of a communication system according to some schematic embodiments of the present disclosure;
FIG. 5 is a schematic diagram of a network architecture according to some schematic embodiments of the present disclosure;
FIG. 6 is a flowchart of a method for analyzing transmission information according to some schematic embodiments of the present disclosure;
FIG. 7 is a flowchart of a method for analyzing transmission information according to some schematic embodiments of the present disclosure;
FIG. 8 is a flowchart of a method for analyzing transmission information according to some schematic embodiments of the present disclosure;
FIG. 9 is a flowchart of a method for analyzing transmission information according to some schematic embodiments of the present disclosure;
FIG. 10 is a flowchart of a method for analyzing transmission information according to some schematic embodiments of the present disclosure;
FIG. 11 is a structural block diagram of an apparatus for analyzing transmission information according to some schematic embodiments of the present disclosure;
FIG. 12 is a structural block diagram of an apparatus for analyzing transmission information according to some schematic embodiments of the present disclosure; and
FIG. 13 is a schematic structural diagram of a communication device according to some schematic embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings. Exemplary embodiments of the present disclosure are described in detail herein, with examples illustrated in the accompanying drawings. When the following description refers to the accompanying drawings, the same numbers in different accompanying drawings represent the same or similar elements unless otherwise indicated. The exemplary embodiments described hereinafter do not represent all embodiments of the present disclosure. Rather, these exemplary embodiments are merely examples of apparatus and methods according to some aspects of the present disclosure, as detailed in the appended claims.

The terms used in the present disclosure are for the purpose of describing specific embodiments only and are not intended to be limit the present disclosure. As used in the present disclosure and the appended claims, the article "a," "an," and "the" are intended to include the plural forms as well, unless the context clearly indicates otherwise. It should also be understood that the phrase "and/or" as used herein refers to and encompasses any or all possible combinations of one or more associated listed items.

It should be understood that although the terms "first," "second," "third," and the like may be used herein to describe various information, such information should not be limited to these terms. These terms are only used to distinguish the same type of information from one another. For example, first information may also be referred to as second information, and similarly, second information may also be referred to as first information, without departing from the scope of the present disclosure. The word "in a case that" herein may be interpreted as "in the case that," "in the case of," "when," "upon," or "in response to determining," depending on the context.

First, the related technologies involved in the embodiments of the present disclosure are described as follows.

### Federated Learning (FL):

As the performance of cameras and sensors on terminal devices continues to improve, more and more terminal devices acquire valuable training data essential to artificial intelligence (AI) or machine learning (ML) model training. For many AI/ML tasks, small sample data acquired by mobile terminals is of great significance for training a global model.

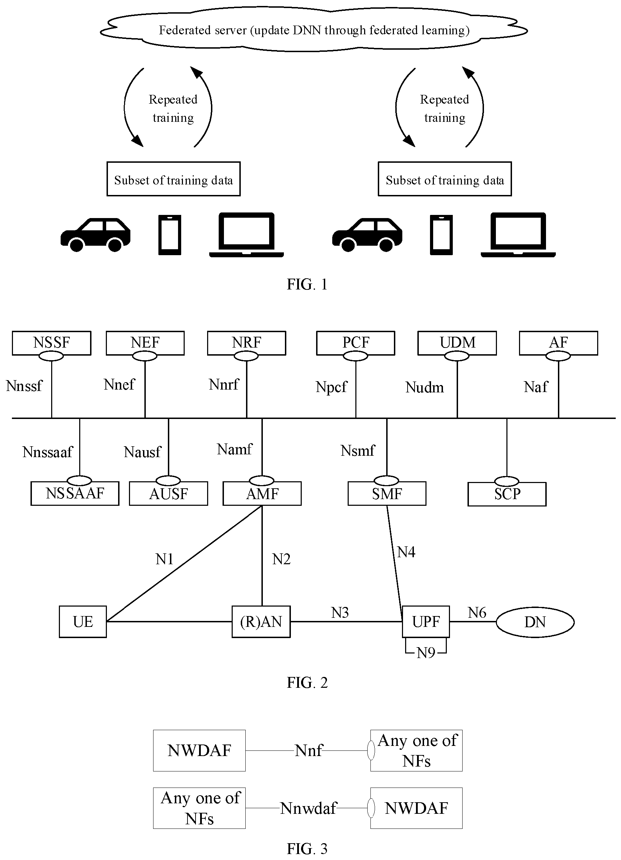

In a schematic architecture diagram of federated learning as shown in FIG. 1, a federated learning server completes the training of a global model by aggregating local training results reported by various federated nodes. The federated nodes may also be referred to as federated terminal devices or simply referred to as terminal devices. In each training iteration, the terminal devices may perform training on the global model downloaded from the federated learning server using local training data, and then report intermediate training results, such as gradients of a deep neural network, to the federated learning server over an uplink channel. The federated learning server then aggregates the acquired gradients and updates the global model. The federated learning server distributes the updated global model to the terminal devices over a downlink channel, and the terminal devices perform the next iterative training for the updated model.

Data exchange is carried out between a group of federated nodes and a server over a network. Since the federated server completes the training of the global model only by aggregating after receiving the training results fed back by all federated nodes, it is the terminal device corresponding to the training result which the federated server receives most slowly that slows down the overall training efficiency. In the case that network resources used by federated learning are limited, fewer communication resources may be allocated to terminal devices that quickly generate results during local training (namely, terminal devices with strong local computing capabilities), such that the terminal devices that quickly generate training results report the training results at a lower speed; and more communication resources are allocated to terminal devices that slowly generate results during local training (namely, terminal devices with weak local computing capabilities), such that the terminal devices that slowly generate training results report the training results at a higher speed. In this way, in the case that the overall network resources are limited, the training results of all the federated nodes reach the federated server simultaneously or almost simultaneously as much as possible, thereby effectively improving the overall efficiency of the federated learning.

### Network Architecture:

The communication system in the related art may include at least one of: a UE, an access network (RAN), a core network (CN), and a data network (DN). The terminal device, the access network, and the core network may be logically organized into a user plane and a control plane. The control plane is responsible for management of a mobile network, and the user plane is responsible for transmission of service data.

One of the important features of such a communication system is service-oriented architecture. That is, a core network element (i.e., a service provider) provides a specific service and makes the service available for use or invocation by other network elements (i.e., consumers) over a defined application programming interface (API). The core network element may also be referred to as a core network function (NF).

The core network element in the related art includes at least one of: an access and mobility management function (AMF), mainly responsible for mobility management in mobile networks, such as user position update, and user network registration, and user handover; a session management function (SMF), mainly responsible for session management in mobile networks, such as session establishment, modification, and release; a policy control function (PCF), mainly supporting provision of a unified policy framework to control network behaviors, providing policy rules to a control layer network function, and responsible for acquiring user subscription information related to policy decisions; an authentication server function (AUSF) for performing security authentication of terminal device; a network exposure function (NEF) mainly for supporting exposure of capabilities and events; a network repository function (NRF) for providing a storage function and a selection function of network function entity information for other network elements; unified data management (UDM) for storing user data, such as subscription data and authentication/authorization data; an application function (AF) for providing application layer services, such as providing data routing related to an application layer, providing an access network capability exposure function, interacting with a policy framework to provide policy control, and interacting with an IP multimedia core network subsystem (IMS); a user plane function (UPF) for forwarding and receiving user data; a network slice selection function (NSSF) mainly for selecting a network slice; a network slice specific authentication and authorization function (NSSAAF) mainly for supporting authentication and authorization of a network slice; or a service communication proxy (SCP) mainly for functions such as flexible routing, message forwarding, and proxy service discovery.

In a schematic architecture diagram of a communication system as shown in FIG. 2, the UE accesses a mobile network. Using an access network device being a base station as an example, the UE establishes an access stratum (AS) connection to the base station to exchange an AS message and perform wireless data transmission. The UE establishes a non-access stratum (NAS) connection to the AMF to exchange NAS messages. The AMF is responsible for the mobility management of the UE, and the SMF is responsible for the session management of the UE. In addition to the mobility management of the UE, the AMF is responsible for forwarding session management-related messages between the UE and the SMF. The PCF is responsible for formulating policies related to mobility management, session management, billing, and the like for the UE. The UPF is connected to the base station and an external data network and performs data transmission.

### Network Data Analytics Function (NWDAF):

In the related art, a new NWDAF network element is added to the core network. The NWDAF network element is capable of acquiring data from other core network elements, network management systems, and the like, and performing big data statistics, analytics, or intelligent data analytics to obtain an analytics result or predicted data on a network side, thereby assisting core network elements to perform more effective control on UE access based on the data analytics result or predicted data.

In short, the NWDAF network element is capable of acquiring data of other core network elements and performing big data analytics based on the data. To this end, the related art defines interfaces between the NWDAF network element and other NFs, as shown in FIG. 3. For example, in the case that any one of the other NFs requests an analytics result (identified by Analytics ID) from the NWDAF network element, data acquisition is realized over an Nnwdaf interface; and in the case that the NWDAF network element transmits an analytics result to any one of the other NFs, data acquisition is realized over an Nnf interface. The Analytics ID, i.e., identity (ID), is used for identifying the content that any one of the other NFs requests the NWDAF network element to analyze.

Part of the analytics results available from the NWDAF network element are shown in Table 1 hereinafter.

**Table 1. Part of the analytics results available from the NWDAF network element**

| Analytics Information | Request Description | Response Description |
|---|---|---|
| Network performance information | Analytics ID: network performance | Statistics and prediction of network load information for an area of interest, and additionally, statistics and prediction of the number of UEs that are in the area. |
| UE mobility information | Analytics ID: UE mobility | Statistics or predictions of the mobility of UE. |
| User data congestion information | Analytics ID: user data congestion | Statistics or predictions regarding user data congestion, including those for user plane transmissions and/or for control plane transmissions. |
| Quality of service (QoS) sustainability | Analytics ID: QoS sustainability | For statistics, the statistics information includes the position and time when the QoS changes, and the exceeded threshold. |
| | | For prediction, the prediction information includes information related to positions and times at which potential QoS changes may occur, thresholds that may be exceeded, and the like. |

In the case that an application server wants to perform an AI application operation with a UE, for example, performing model distribution and model aggregation in federated learning, or performing other AI operations, such as model segmentation, the application server wants to know in advance the communication performance of the UE that may participate in the AI operation, that is, the application server wants to obtain a prediction result of the transmission performance of the UE that may participate in the AI operation, for example, the transmission time required for completing a model transmission between the UE and the server, the time required for the UE to complete a model transmission, the transmission time required from the UE to the server, and the like. The application server may select a suitable UE to perform an AI operation based on the prediction result. In addition, the prediction result may also be used to support other network elements of the core network to select a suitable UE to perform an AI operation, or support other network elements of the core network to recommend a suitable UE to the application server to perform an AI operation, or support other network elements of the core network to recommend a suitable operation time window to the application server to perform an AI operation. Therefore, such a prediction is of great significance.

However, there is still no solution for how the core network generates a prediction of UE communication performance, such as a prediction of UE transmission completion time.

Therefore, the present disclosure provides a method for analyzing transmission information to realize statistics, analytics and prediction of UE transmission information, such as realizing prediction of UE transmission time, by newly defining an analytics supported by an NWDAF network element.

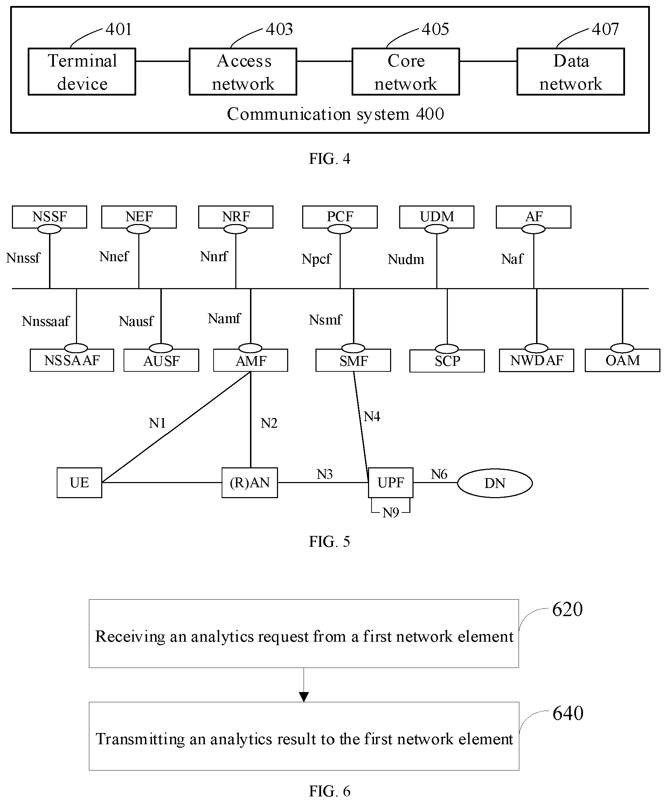

FIG. 4 is a schematic architecture diagram of a communication system 400 according to some exemplary embodiments of the present disclosure. As shown in FIG. 4, the communication system 400 includes at least one of: a terminal device 401, an access network 403, a core network 405, or a data network 407. The terminal device 401, the access network 403, and the core network 405 are logically divided into a user plane and a control plane. The control plane is responsible for management of a mobile network and the user plane is responsible for transmission of service data.

The terminal device 401 is an entry for interaction between a mobile user and a network, and is capable of providing basic computing and storage capabilities, displaying a service window to the user, and accepting a user operation input. The terminal device 401 establishes a signal connection and a data connection with the access network 403 by using a certain air interface technology, thereby transmitting a control signal and service data to a mobile network. The terminal device 401 may be deployed on land, on water, in the air, and the like, including, but not limited to: a handheld device, a wearable device, a vehicle-mounted device, an Internet of things device, and the like, for example: a mobile phone, a tablet computer, an e-book reader, a laptop portable computer, a desktop computer, a television, a game console, a mobile Internet device (MID), a virtual reality (VR) device, an augmented reality (AR) device, a mixed reality (MR) device, an extended reality (XR) device, a baffle reality (BR) device, a cinematic reality (CR) device, a deceive reality (DR) device, a wearable device, a handle, an electronic tag, a controller, a wireless terminal in industrial control, a wireless terminal in self-driving, a wireless terminal in remote medical, a wireless terminal in smart grid, a wireless terminal in transportation safety, a wireless terminal in smart city, a wireless terminal in a smart home, a wireless terminal in remote medical surgery, a cellular phone, a cordless phone, a session initiation protocol (SIP) phone, a wireless local loop (WLL) station, a personal digital assistant (PDA), a set top box (STB), a customer premise equipment (CPE), and the like.

The access network 403 is configured to implement access-related functions, provides a network access function for authorized users in a cell coverage area, and transmits user data based on user levels, service requirements, and the like over transmission tunnels of different qualities. The access network 403 is capable of managing and reasonably using its own resources, providing an access service to the terminal device 401 as needed, and forwarding a control signal and user data between the terminal device 401 and the core network 405. The access network 403 includes an access network device. The access network device is a device providing access for the terminal device 401, and includes a radio access network (RAN) device and an access network (AN) device. The RAN device is primarily a wireless network device in a 3GPP network and the AN device is a non-3GPP-defined access network device. In systems using different radio access technologies, names of devices with base station functions are different. For example, in a 5^{th} generation (5G) mobile communication technology system, the device is referred to as a RAN or a next generation node base station (gNB); in a long-term evolution (LTE) system, the device is referred to as evolved node B (evolved NodeB, eNB, or eNodeB).

The core network 405 is responsible for maintaining subscription data of the mobile network, managing network elements of the mobile network, and providing functions such as session management, mobility management, policy management, and security authentication for the terminal device 401. For example, in the case that the terminal device 401 is attached, the core network 405 provides network access authentication for the terminal device 401; in the case that the terminal device 401 initiates a service request, the core network 405 allocates a network resource to the terminal device 401; in the case that the terminal device 401 moves, the core network 405 updates a network resource for the terminal device 401; in the case that the terminal device 401 is idle, the core network 405 provides a fast recovery mechanism for the terminal device 401; in the case that the terminal device 401 is detached, the core network 405 releases a network resource for the terminal device 401; in the case that the terminal device 401 needs to transmit or receive service data, the core network provides a data routing function for the terminal device 401, such as forwarding uplink data to a data network 407; or receiving downlink data to be transmitted to the terminal device 401 from the data network 407, forwarding the downlink data to the access network 403, and transmitting the downlink data to the terminal device 401. The core network 405 is deployed in a private network or in a public network.

The data network 407 is configured to provide a service for a user. The data network 407 is a private network, such as a local area network; or an external network not controlled by operators, such as the Internet; or a proprietary network co-deployed by the operators, such as an Internet Protocol (IP) multimedia core network subsystem (IMS). The terminal device 401 may access the data network 407 using an established protocol data unit (PDU) session.

In some embodiments, the access network 403 and/or the core network 405 and/or the data network 407 are considered network devices.

Exemplarily, two communication scenarios are present in the communication system 400: an uplink communication scenario and a downlink communication scenario. The uplink communication refers to transmitting a signal in a direction of the terminal device 401, the access network 403, the core network 405, and the data network 407. The downlink communication refers to transmitting a signal in a direction of the data network 407, the core network 405, the access network 403, and the terminal device 401.

It should be understood that, in some embodiments of the present disclosure, "5G" may also be referred to as "5G new radio (NR)" or "NR", and a terminal device may also be referred to as a user equipment (UE), an access terminal, a subscriber unit, a subscriber station, a mobile station, a mobile terminal, a remote station, a remote terminal, a mobile device, a user terminal, a terminal, a wireless communication device, a user agent, or a user apparatus.

The technical solutions described in some embodiments of the present disclosure are applicable to a 5G system, an LTE system, an evolution system of the 5G system and the LTE system, or applicable to a beyond fifth generation (B5G) mobile communication system, a 6G system, and subsequent evolution systems. The networking scenario of the 5G system includes a non-standalone (NSA) and/or a standalone (SA).

FIG. 5 is a detailed architecture determined on the basis of FIG. 4, which includes all or a part of the network elements shown in FIG. 5. The corresponding functions of the network elements already shown in FIG. 2 have been mentioned above and are not described herein. The network elements not shown in FIG. 2 are as follows: the NWDAF as described above, mainly configured for network data analytics; and an operation administration and maintenance function (OAM), mainly configured for operation, maintenance and management of the network and services.

The NWDAF collects data from other NFs, UEs, external application servers, or AFs.

In the architecture shown in FIG. 5, an N1 interface is a reference point between the UE and the AMF; an N2 interface is a reference point between the RAN and the AMF, and is configured to transmit an NAS message, and the like; an N3 interface is a reference point between the RAN and the UPF, and is configured to transmit user plane data, and the like; an N4 interface is a reference point between the SMF and the UPF, and is configured to transmit information such as tunnel identification information of the N3 connection, data cache indication information, and a downlink data notification message; an N6 interface is a reference point between the UPF and the DN, and is configured to transmit user plane data, and the like. An N9 interface is a user plane interface between UPFs, and is configured to transfer uplink and downlink user data flows between the UPFs. An Nsmf interface is a service-oriented interface provided by the SMF, and similarly, service-oriented interfaces corresponding to other network elements are shown in the figure and are not described. An NG interface (not shown in the figure) is an interface between the RAN and the core network.

It should be noted that the names of the interfaces among the network elements in FIG. 4 and FIG. 5 are only for an example, and the names of the interfaces in the specific implementation may be other names, which is not specifically limited in the embodiments of the present disclosure. The names of the network elements (such as the SMF, the AF, and the UPF) included in FIG. 4 and FIG. 5 are also only for an example, and do not impose limitations on the functions of the network elements themselves. In a network in the related art and other networks in the future, the above network elements may also be other names, which is not specifically limited in the embodiments of the present disclosure. For example, in a 6G network, some or all of the above network elements may follow the terms used in 5G, may be given other names, and the like, which are described herein in a unified manner and are not described hereinafter. Furthermore, it should be understood that the names of the messages (or signaling) transmitted among the above network elements are also only for an example, and do not impose any limitations on the functions of the messages themselves.

FIG. 6 is a flowchart of a method for analyzing transmission information according to some exemplary embodiments of the present disclosure. Description is given based on an example in which the method is applicable to the NWDAF shown in FIG. 4. The method includes at least part of the following processes.

**In process 620,** an analytics request is received from a first network element.

The analytics request is used for requesting to analyze UE transmission information, and/or used for requesting to analyze UE transmission information related to a single transmission, and/or used for requesting to analyze UE transmission information related to a transmission of a first data volume.

**In process 640,** an analytics result is transmitted to the first network element.

The analytics result includes UE transmission information and/or UE transmission information related to a single transmission and/or UE transmission information related to a transmission of a first data volume.

The analytics request is either referred to as a statistical request or a prediction request. The analytics result is either referred to as a statistical result or a prediction result. After receiving such a request from the first network element, the NWDAF feeds back a statistical result/an analytics result/a prediction result related to UE transmission information to the first network element.

The UE transmission information may also be understood as UE transmission capability information, or as UE transmission performance information, or as UE communication capability information, or as UE communication performance information.

In summary, in the method of the present disclosure, the NWDAF receives the analytics request and transmits the analytics result, such that the analytics on the UE transmission information is realized.

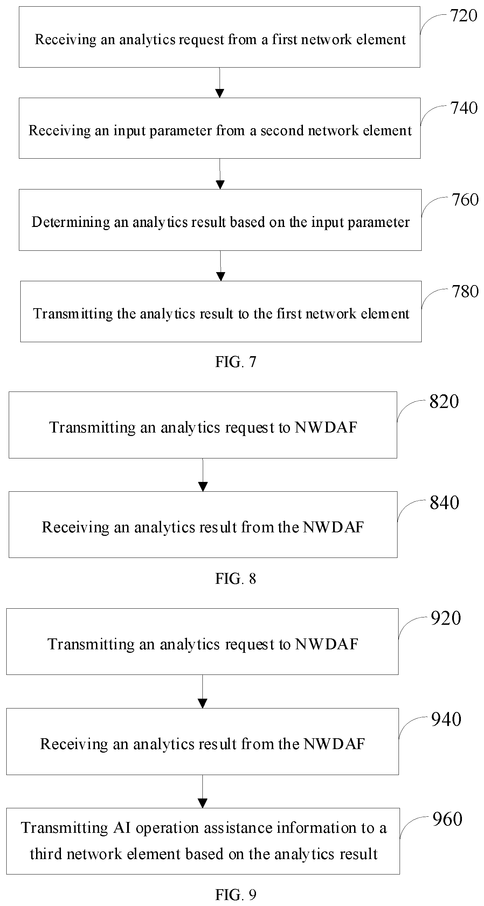

FIG. 7 is a flowchart of a method for analyzing transmission information according to some exemplary embodiments of the present disclosure. Description is given based on an example in which the method is applicable to the NWDAF shown in FIG. 4. The method includes at least part of the following processes.

**In process 720,** an analytics request is received from a first network element.

The first network element includes NEF and/or PCF.

The analytics request is used for requesting to analyze UE transmission information, and/or used for requesting to analyze UE transmission information related to a single transmission, and/or used for requesting to analyze UE transmission information related to a transmission of a first data volume.

In some embodiments, the analytics request is used for requesting to analyze at least one of: a UE transmission completion time; UE geographical distribution; a UE transmission time window; or a UE list.

In some embodiments, the analytics request includes at least one of the following parameters.
- Analytics identity (analytics ID)

Exemplarily, the analytics identity includes at least one of "UE transmission completion time," "UE geographical distribution," "UE transmission time window," "UE list," or "UE transmission information."
- Candidate terminal device

The candidate terminal device refers to a candidate UE provided by the first network element. The NWDAF performs analytics on UE transmission information related to the candidate UE, or the NWDAF preferentially performs analytics on UE transmission information related to the candidate UE, or the NWDAF must perform analytics on UE transmission information related to the candidate UE.

In some embodiments, the candidate UEs are represented by a list of UE IDs.
- Recommended terminal device

The recommended terminal device refers to a UE recommended by the first network element. The NWDAF performs analytics on UE transmission information related to the recommended UE, or the NWDAF preferentially performs analytics on of UE transmission information related to the recommended UE, or the NWDAF needs to perform analytics on UE transmission information related to the recommended UE.

In some embodiments, the recommended UEs are represented by a list of UE IDs.
- Suggested terminal device

The suggested terminal device refers to a UE proposed by the first network element. The NWDAF performs analytics on UE transmission information related to the suggested UE, or the NWDAF preferentially performs analytics on UE transmission information related to the suggested UE, or the NWDAF needs to perform analytics on UE transmission information related to the suggested UE.

In some embodiments, the suggested UEs are represented by a list of UE IDs.
- Desired terminal device

The desired terminal device refers to a UE desired by the first network element. The NWDAF performs analytics on UE transmission information related to the desired UE, or the NWDAF preferentially performs analytics on UE transmission information related to the desired UE, or the NWDAF needs to perform analytics on UE transmission information related to the desired UE.

In some embodiments, the suggested UEs are represented by a list of UE IDs.
- Number of desired terminal devices

The number of desired terminal devices refers to the number of UEs that the NWDAF needs to provide, or number of UEs that are desired to be provided by the NWDAF.

Exemplarily, after the NWDAF performs the analytics, 50 UEs meet the conditions corresponding to the other parameters in the analytics request, and in the case that the number of the desired terminal devices is 10, the NWDAF only needs to provide 10 UEs to the first network element. Exemplarily, these 10 UEs are 10 UEs with the shortest single transmission time among the 50 UEs, or 10 UEs currently in an idle state among the 50 UEs, or 10 UEs with the shortest time to complete a transmission of a first data volume among the 50 UEs.
- Terminal device currently in an idle state
- Number of terminal devices currently in an idle state
- Terminal device currently in a busy state
- Number of terminal devices currently in a busy state
- Terminal device in an idle state within a first time period
- Number of terminal devices in an idle state within a first time period
- Terminal device in a busy state within a first time period
- Number of terminal devices in a busy state within a first time period
- Mean value of time for candidate terminal devices to complete a single transmission
- Maximum value of time to complete a single transmission among candidate terminal devices
- Minimum value of time to complete a single transmission among candidate terminal devices
- Median of the time to complete a single transmission among candidate terminal devices
- Mean value of time for recommended terminal devices to complete a single transmission
- Maximum value of time to complete a single transmission among recommended terminal devices
- Minimum value of time to complete a single transmission among recommended terminal devices
- Median of time to complete a single transmission among recommended terminal devices
- Mean value of the time for suggested terminal devices to complete a single transmission
- Maximum value of time to complete a single transmission among suggested terminal devices
- Minimum value of time to complete a single transmission among suggested terminal devices
- Median of time to complete a single transmission among suggested terminal devices
- Mean value of time for desired terminal devices to complete a single transmission
- Maximum value of time to complete a single transmission among desired terminal devices
- Minimum value of time to complete a single transmission among desired terminal devices
- Median of time to complete a single transmission among desired terminal devices
- Upper limit of time for completing a single transmission

This indicates that the first network element desires, or suggests, or recommends, or requires, or instructs that the time for a UE to complete a single transmission, which is fed back by the NWDAF, is lower than the upper limit.
- Upper limit of time for completing a transmission of a first data volume

This indicates that the first network element desires, or suggests, or recommends, or requires, or instructs that the time for a UE to complete a transmission of a first data volume, which is fed back by the NWDAF, is lower than the upper limit.
- Network slice

This indicates that the first network element desires, or suggests, or recommends, or requires, or instructs the NWDAF to analyze UE transmission information related to the network slice.

In some embodiments, the network slice is indicated by a single network slice selection assistance information (S-NSSAI).
- Data network name (DNN)

This indicates that the first network element desires, or suggests, or recommends, or requires, or instructs the NWDAF to analyze UE transmission information related to the DNN.
- Transmission service

This indicates that the first network element desires, or suggests, or recommends, or requires, or instructs the NWDAF to analyze UE transmission information related to the transmission service.
- Type of a transmission service

This indicates that the first network element desires, or suggests, or recommends, or requires, or instructs the NWDAF to analyze UE transmission information related to the type of the transmission service.
- Area of interest (AoI)

This refers to an area of interest, or a cell area, or a tracking area, or an absolute geographical position area, or a relative geographical position area of the first network element.

In some embodiments, the AoI indicates that the first network element desires, or suggests, or recommends, or requires, or instructs that a UE provided by the NWDAF is located within the AoI.

In some embodiments, the AoI indicates that the first network element desires, suggests, recommends, requires, or instructs the NWDAF to analyze the UE transmission information related to the UE located within the AoI.
- Analytics target time window

In some embodiments, the analytics target time window is used for instructing that the NWDAF performs analytics on UE transmission information within the time window, or the NWDAF preferentially performs analytics on UE transmission information within the time window, or the NWDAF must perform analytics on UE transmission information within the time window.

In some embodiments, the analytics target time window is used for indicating a result for the analytics on UE transmission information within the time window that the first network element desires, or suggests, or recommends, or requires the NWDAF to provide.

The time window is used for indicating absolute time, such as 10: 10; or relative time, such as after 10 min; or an absolute time period, such as 10:10 to 10:20; or a relative time period, such as 10 min to 20 min in the future.
- Preferred analytics target time window

In some embodiments, the preferred analytics target time window is used for indicating a result for the analytics on the UE transmission information within the time window that the first network element prefers the NWDAF to provide.

In some embodiments, the preferred analytics target time window is used for instructing that the NWDAF performs analytics on UE transmission information within the time window, or the NWDAF preferentially performs analytics on UE transmission information within the time window, or the NWDAF must perform analytics on UE transmission information within the time window.
- Desired analytics target time window

In some embodiments, the desired analytics target time window is used for indicating a result for analytics on UE transmission information within the time window that the first network element desires the NWDAF to provide.

In some embodiments, the desired analytics target time window is used for instructing that the NWDAF performs analytics on UE transmission information within the time window, or the NWDAF preferentially performs analytics on UE transmission information within the time window, or the NWDAF needs to perform analytics on UE transmission information within the time window.
- Frequency at which the NWDAF is desired to transmit an analytics result

This indicates that the first network element desires the NWDAF to transmit the analytics result according to the frequency.
- Time at which the NWDAF is desired to transmit an analytics result

This indicates that the first network element desires the NWDAF to transmit the analytics result according to the time.
- Number of times the NWDAF is desired to transmit an analytics result

This indicates that the first network element desires the NWDAF to transmit the analytics result according to the number of times.
- Frequency at which the NWDAF is instructed to transmit an analytics result

This indicates that the first network element instructs the NWDAF to transmit the analytics result according to the frequency.
- Time at which the NWDAF is instructed to transmit an analytics result

This indicates that the first network element instructs the NWDAF to transmit the analytics result according to the time.
- Number of times the NWDAF is instructed to transmit an analytics result

This indicates that the first network element instructs the NWDAF to transmit the analytics result according to the number of times.

In process 740, an input parameter from a second network element is received.

In some embodiments, the second network element includes at least one of: an OAM, an AMF, an AF, an LMF, or a UPF.

In some embodiments, the NWDAF determines, based on the parameter in the analytics request, an input parameter required to generate the analytics result, and receives the input parameter from a second network element. It may also be understood that the NWDAF determines, based on the parameter in the analytics request, an input parameter required to generate the analytics result, and collects the input parameter from a second network element.

The input parameter includes at least one of the following items.
- Data volume of a transmission service

This refers to a to-be-transmitted data volume of the transmission service related to the "transmission service" parameter in the analytics request. Exemplarily, the data volume is a data volume required to transmit one AI model; or, the data volume is a data volume that needs to be transmitted for each training iteration in federated learning.
- Data volume in a single transmission

This refers to a data volume required to complete a single transmission
- Area in which a terminal device is located

This refers to a geographical area in which the terminal device is located
- Cell in which a terminal device is located
- Tracking area in which a terminal device is located
- Absolute geographical position of terminal device
- Relative geographical position of terminal device
- Capability of terminal device

Exemplarily, the capability of terminal device refers to whether a terminal device has a capability to support an AI operation, or refers to a level of capability of a terminal device to support an AI operation, or refers to whether a terminal device has a capability to support federated learning, or refers to a level of capability to support federated learning, or refers to a capability of a terminal device to support energy saving, or refers to a level of capability of a terminal device to support energy saving.
- State of terminal device

Exemplarily, the state includes at least one of: an idle state, a busy state, an active state, an inactive state, a connected state, a continuous reception (CRX) state, a discontinuous reception (DRX) state, a continuous transmission (CTX) state, and a discontinuous transmission (DTX) state.
- QoS information of terminal device

This refers to information of a terminal device related to an QoS parameter.
- Transmission information of terminal device.

This refers to transmission information when a terminal device completes a single transmission or completes a transmission of a first data volume.
- Transmission bit rate of terminal device

This refers to a transmission bit rate at which a terminal device completes a single transmission or completes a transmission of a first data volume.
- Transmission rate of terminal device

This refers to a transmission rate at which a terminal device completes a single transmission or completes a transmission of a first data volume.
- Packet delay of terminal device

This refers to a packet delay when a terminal device completes a single transmission or completes a transmission of a first data volume.
- Transmission information of terminal device related to network slice

This refers to transmission information related to a network slice which corresponds to the "network slice" parameter in the analytics request.
- Transmission bit rate of terminal device related to network slice
- Transmission rate of terminal device related to network slice
- Packet delay of terminal device related to network slice
- Transmission information of terminal device related to a DNN

This refers to transmission information related to a DNN which corresponds to the "DNN" parameter in the analytics request.
- Transmission bit rate of terminal device related to a DNN
- Transmission rate of terminal device related to a DNN
- Packet delay of terminal device related to a DNN
- Transmission information of terminal device related to a transmission service

This refers to transmission information related to a transmission service which corresponds to the "transmission service" parameter in the analytics request.
- Transmission bit rate of terminal device related to a transmission service
- Transmission rate of terminal device related to a transmission service
- Packet delay of terminal device related to a transmission service
- Transmission information of terminal device related to type of a transmission service

This refers to transmission information related to the type of the transmission service which corresponds to the "type of transmission service" parameter in the analytics request.
- Transmission bit rate of terminal device related to type of a transmission service
- Transmission rate of terminal device related to type of a transmission service
- Packet delay of terminal device related to type of a transmission service

In process 760, an analytics result is determined based on the input parameter.

The NWDAF determines or generates or produces, based on a received input parameter from a second network element, an analytics result. It may also be understood that the NWDAF determines or generates or produces, based on an input parameter collected from a second network element, an analytics result.

The analytics result includes at least one of the following parameters.
- Candidate terminal device
- Recommended terminal device
- Suggested terminal device
- Terminal device currently in an idle state
- Number of terminal devices currently in an idle state
- Terminal device currently in a busy state
- Number of terminal devices currently in a busy state
- Terminal device currently in a target state.

The target state may be a terminal device state corresponding to a parameter in the analytics request. Exemplarily, the target state includes at least one of an idle state, a busy state, an active state, an inactive state, a connected state, a CRX state, a DRX state, a CTX state, or a DTX state.
- Number of terminal devices currently in a target state
- Terminal device in an idle state within a first time period
- Number of terminal devices in an idle state within a first time period
- Terminal device in a busy state within a first time period
- Number of terminal devices in a busy state within a first time period
- Terminal device in a target state within a first time period
- Number of terminal devices in a target state within a first time period
- Time for a terminal device to complete a single transmission
- Time for a terminal device to complete a transmission of a first data volume
- Transmission time window of terminal device

This means that a terminal device supports a transmission within this time window.
- Start moment of transmission by terminal device

This means that a terminal device supports the start of a transmission at this moment.
- End moment of transmission by terminal device.

This means that a terminal device supports the end of a transmission at this moment.
- Mean value of time for terminal devices to complete a single transmission within a second time period

The second time period is identical to or different from the first time period.
- Maximum value of time for terminal devices to complete a single transmission within a second time period
- Minimum value of time for terminal devices to complete a single transmission within a second time period
- Median of time for terminal devices to complete a single transmission within a second time period
- Mean value of time for terminal devices to complete a transmission of a first data volume within a second time period
- Maximum value of time for terminal devices to complete a transmission of a first data volume within a second time period
- Minimum value of time for terminal devices to complete a transmission of a first data volume within a second time period
- Median of time for terminal devices to complete a transmission of a first data volume within a second time period
- Whether a terminal device is currently in an area of interest (AoI)
- Whether a terminal device is in an area of interest (AoI) within a third time period

The third time period is identical to or different from the first time period. The third time period is identical to or different from the second time period.
- Area in which a terminal device is currently located
- **·** Area in which a terminal device is located with a third time period
- Terminal device below an upper limit of time for completing a single transmission
- Number of terminal devices below an upper limit of time for completing a single transmission
- Mean value of time for candidate terminal devices to complete a single transmission
- Maximum value of time to complete a single transmission among candidate terminal devices
- Minimum value of time to complete a single transmission among candidate terminal devices
- Median of the time to complete a single transmission among candidate terminal devices
- Mean value of time for recommended terminal devices to complete a single transmission
- Maximum value of time to complete a single transmission among recommended terminal devices
- Minimum value of time to complete a single transmission among recommended terminal devices
- Median of time to complete a single transmission among recommended terminal devices
- Mean value of the time for suggested terminal devices to complete a single transmission
- Maximum value of time to complete a single transmission among suggested terminal devices
- Minimum value of time to complete a single transmission among suggested terminal devices
- Median of time to complete a single transmission among suggested terminal devices
- Mean value of time for desired terminal devices to complete a single transmission
- Maximum value of time to complete a single transmission among desired terminal devices
- Minimum value of time to complete a single transmission among desired terminal devices
- Median of time to complete a single transmission among desired terminal devices
- Numbering of the analytics result

This is used for identifying the analytics result.
- Time window corresponding to the analytics result

It is used for indicating a transmission time corresponding to the analytics result.

**In process 780,** the analytics result is transmitted to the first network element.

The analytics result includes UE transmission information and/or UE transmission information related to a single transmission and/or UE transmission information related to a transmission of a first data volume.

In some embodiments, the NWDAF transmits the analytics result to the first network element at an analytics completion moment; and/or the NWDAF transmits an updated analytics result to the first network element in the case that the analytics result is updated; and/or the NWDAF periodically transmits the analytics result to the first network element; and/or the NWDAF semi-periodically transmits the analytics result to the first network element; and/or the NWDAF non-periodically transmits the analytics result to the first network element; and/or the NWDAF transmits, based on the parameter related to the frequency of transmitting an analytics result in the analytics request, the analytics result to the first network element; and/or the NWDAF transmits, based on the parameter related to the time for transmitting an analytics result in the analytics request, the analytics result to the first network element; and/or the NWDAF transmits, based on the parameter related to the number of times for transmitting an analytics result in the analytics request, the analytics result to the first network element.

The analytics request is either referred to as a statistical request or a prediction request. The analytics result is either referred to as a statistical result or a prediction result. After receiving such a request from the first network element, the NWDAF feeds back a statistical result/an analytics result/a prediction result related to UE transmission information to the first network element.

The UE transmission information may also be understood as UE transmission capability information, or as UE transmission performance information, or as UE communication capability information, or as UE communication performance information.

In summary, in the method of the present disclosure, the NWDAF receives the analytics request and transmits the analytics result, such that the analytics on the UE transmission information is realized. Moreover, specific and feasible analytics request parameters, analytics result parameters, and input parameters are provided, such that the reliability and operability of the analytics on the UE transmission information are improved.

FIG. 8 is a flowchart of a method for analyzing transmission information according to some exemplary embodiments of the present disclosure. Description is given based on an example in which the method is applicable to the first network element. The method includes at least part of the following processes.

**In process 820,** an analytics request is transmitted to NWDAF.

The analytics request is used for requesting to analyze UE transmission information, and/or used for requesting to analyze UE transmission information related to a single transmission, and/or used for requesting to analyze UE transmission information related to a transmission of a first data volume.

**In process 840,** an analytics result from the NWDAF is received.

The analytics result includes UE transmission information and/or UE transmission information related to a single transmission and/or UE transmission information related to a transmission of a first data volume.

The analytics request is either referred to as a statistical request or a prediction request. The analytics result is either referred to as a statistical result or a prediction result. After receiving such a request from the first network element, the NWDAF feeds back a statistical result/an analytics result/a prediction result related to UE transmission information to the first network element.

The UE transmission information may also be understood as UE transmission capability information, or as UE transmission performance information, or as UE communication capability information, or as UE communication performance information.

In summary, in the method of the present disclosure, the first network element transmits the analytics request and receives the analytics result, such that the analytics on the UE transmission information is realized.

FIG. 9 is a flowchart of a method for analyzing transmission information according to some exemplary embodiments of the present disclosure. Description is given based on an example in which the method is applicable to the first network element. The method includes at least part of the following processes.

**In process 920,** an analytics request is transmitted to an NWDAF.

The first network element includes an NEF and/or a PCF.

The analytics request is used for requesting to analyze UE transmission information, and/or used for requesting to analyze UE transmission information related to a single transmission, and/or used for requesting to analyze UE transmission information related to a transmission of a first data volume.

In some embodiments, the analytics request is used for requesting to analyze at least one of: a UE transmission completion time; UE geographical distribution; a UE transmission time window; or a UE list.

In some embodiments, for the parameter in the analytics request, reference may be made to the above process 720, which will not be described herein.

**In process 940,** an analytics result is received from the NWDAF.

In some embodiments, the NWDAF determines or generates or produces, based on a received input parameter from a second network element, an analytics result. It may also be understood that the NWDAF determines or generates or produces, based on an input parameter collected from a second network element, an analytics result.

For the parameter in the analytics result, reference may be made to the above process 760, which will not be described herein.

In some embodiments, the second network element includes at least one of: an OAM, an an AMF, an AF, an LMF, or a UPF.

In some embodiments, the NWDAF determines, based on the parameter in the analytics request, an input parameter required to generate the analytics result, and receives the input parameter from a second network element. It may also be understood that the NWDAF determines, based on the parameter in the analytics request, an input parameter required to generate the analytics result, and collects the input parameter from a second network element.

For the input parameter, reference may be made to the above process 740, which will not be described herein.

The first network element receives an analytics result from the NWDAF.

The analytics result includes UE transmission information and/or UE transmission information related to a single transmission and/or UE transmission information related to a transmission of a first data volume.

In some embodiments, the first network element receives an analytics result from the NWDAF at an analytics completion moment; and/or receives an analytics result from the NWDAF in the case that the analytics result is updated; and/or receives an analytics result periodically from the NWDAF; and/or receives an analytics result semi-periodically from the NWDAF; and/or receives an analytics result non-periodically from the NWDAF; and/or receives an analytics result from the NWDAF based on the parameter related to the frequency of transmitting an analytics result in the analytics request; and/or receives an analytics result from the NWDAF based on the parameter related to the time for transmitting an analytics result in the analytics request; and/or receives an analytics result from the NWDAF based on the parameter related to the number of times of transmitting an analytics result in the analytics request.

The analytics request is either referred to as a statistical request or a prediction request. The analytics result is either referred to as a statistical result or a prediction result. After receiving such a request from the first network element, the NWDAF feeds back a statistical result/an analytics result/a prediction result related to UE transmission information to the first network element.

The UE transmission information may also be understood as UE transmission capability information, or as UE transmission performance information, or as UE communication capability information, or as UE communication performance information.

**In process 960,** AI operation assistance information is transmitted to a third network element based on the analytics result.

The AI operation assistance information refers to assistance information related to an AI operation, or understood as information that assists the third network element in performing an AI operation, or understood as assistance information required by the third network element to perform an AI operation.

In some embodiments, the third network element includes an AF.

In some embodiments, the AI operation assistance information includes at least one of the following items.
- Candidate AI operation terminal device

This refers to a candidate terminal device related to an AI operation, or a candidate terminal device assisting the third network element to perform an AI operation, or a candidate terminal device required by the third network element to perform an AI operation. The information supports the third network element to select a suitable terminal device for the AI operation.
- Recommended AI operation terminal device

This refers to a recommended terminal device participating in an AI operation, or a recommended terminal device assisting the third network element to perform an AI operation. The information supports the third network element to select a suitable terminal device for the AI operation.
- Suggested AI operation terminal device

This refers to a suggested terminal device participating in an AI operation or a suggested terminal device assisting the third network element to perform an AI operation. The information supports the third network element to select a suitable terminal device for the AI operation.
- Number of candidate AI operation terminal devices.

The information supports the third network element to select a suitable terminal device for the AI operation.
- Number of recommended AI operation terminal devices

This information supports the third network element to select a suitable terminal device for the AI operation.
- Number of suggested AI operation terminal devices

This information supports the third network element to select a suitable terminal device for the AI operation.
- Candidate AI operation time window

This refers to a candidate time window related to an AI operation, or a candidate time window for the third network element to perform an AI operation, or a candidate time window required by the third network element to perform an AI operation. The information supports the third network element to perform the AI operation in a suitable time window.
- Recommended AI operation time window

This refers to a recommended time window participating in an AI operation, or a recommended time window for the third network element to perform an AI operation. The information supports the third network element to perform the AI operation in a suitable time window.
- Suggested AI operation time window

This refers to a suggested time window participating in an AI operation, or a suggested time window for the third network element to perform an AI operation. The information supports the third network element to perform the AI operation in a suitable time window.

In summary, in the method of the present disclosure, the first network element transmits the analytics request and receives the analytics result, such that the analytics on the UE transmission information is realized. Moreover, specific and feasible analytics request parameters, analytics result parameters, and input parameters are provided, such that the reliability and operability of the analytics on the UE transmission information are improved.

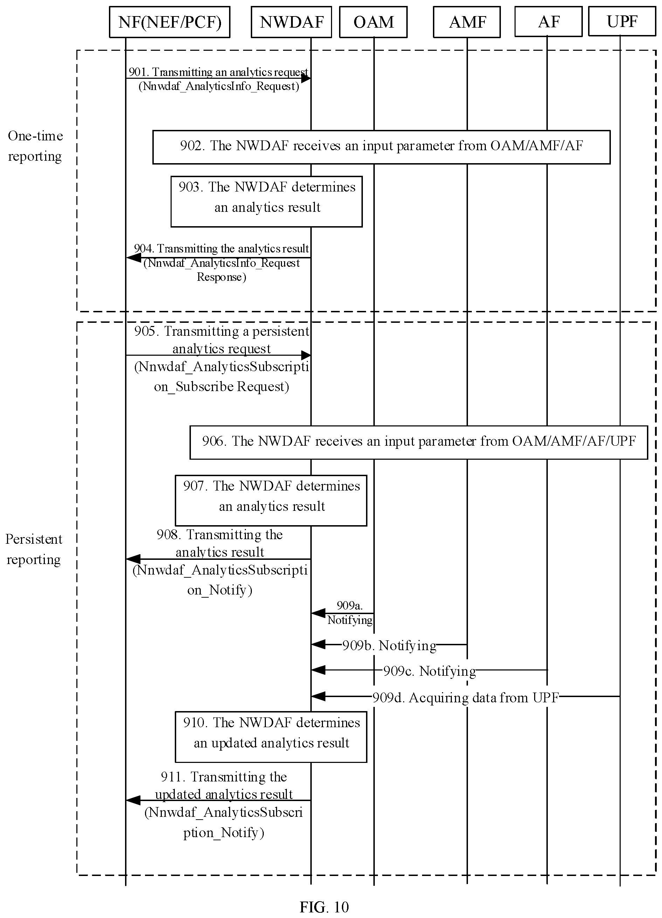

FIG. 10 is a flowchart of a method for analyzing transmission information according to some exemplary embodiments of the present disclosure. The method includes at least part of the following processes.

**In process 901,** an NF transmits an analytics request to an NWDAF.

The NF transmits Nnwdaf_AnalyticsInfo_Request to the NWDAF, which includes the following parameters: an analytics identity, which is a UE transmission completion time; a candidate terminal device, which is a list of UE IDs; an AoI, which is a cell B; a network slice, which is NS1; DNN, which is local area network 2; and a preferred time window, which is 18:10 to 18:20. The analytics identity may be understood as an analytics content, the candidate terminal device may be understood as an analytics target, and the AoI, the network slice, the DNN, and the preferred time window may be understood as analytics filtering information.

The NF is, for example, NEF and/or PCF.

**In process 902,** the NWDAF receives an input parameter from an OAM and/or an AMF and/or an AF.

The NWDAF acquires, from the OAM, QoS information related to a terminal device corresponding to a UE ID in the analytics request, such as a bit rate, a transmission rate, and a packet delay of transmission data, and other information. The information allows the NWDAF to calculate and predict a time required for a UE to transmit a certain data volume at a future time (e.g., 18:10 to 18:20).

The NWDAF also acquires, from the AF, information about a data volume that needs to be transmitted, i.e., a data volume that needs to be transmitted for the transmission of a service (e.g., a service related to a network slice NS1 and/or local area network 2).

The NWDAF also acquires, from the AMF and/or the OAM, geographical distribution information of UEs, so as to know which cells in which the UEs are located are the cells B corresponding to parameters of the AoI among terminal devices corresponding to the UE IDs.

**In process 903,** the NWDAF determines an analytics result based on the received input parameter.

The NWDAF performs, based on the information collected in the process 902, statistics or prediction on a transmission completion time of a UE at a future time (e.g., 18:10 to 18:20). For the generated analytics result, reference is made to those described in the above process 760, which is not described herein.

**In process 904,** the NWDAF transmits the analytics result to the NF.

The NWDAF transmits Nnwdaf_AnalyticsInfo_Request Response to the NF. The corresponding analytics identity is the UE transmission completion time.

Processes 901 to 904 may be considered as processes of one-time reporting of the analytics result.

**In process 905,** the NF transmits a persistent analytics request to the NWDAF.

The NF transmits Nnwdaf_AnalyticsSubscription_Subscribe to the NWDAF, which further includes an indication of persistent reporting in addition to those described in the process 901. For example, a frequency at which the NWDAF is desired to transmit an analytics result is the persistent reporting, that is, in the case that a threshold value of a certain parameter is reached, the NWDAF needs to notify the NF or transmit an updated analytics result to the NF.

**In process 906,** the NWDAF receives an input parameter from the OAM, and/or the AMF, and/or the AF, and/or the UPF.

The NWDAF acquires, from the OAM, QoS information related to a terminal device corresponding to a UE ID in the analytics request, such as a bit rate, a transmission rate, and a packet delay of transmission data, and other information. The information allows the NWDAF to calculate and predict a time required for a UE to transmit a certain data volume at a future time (e.g., 18:10 to 18:20).

The NWDAF also acquires, from the AF, information about a data volume that needs to be transmitted, i.e., a data volume that needs to be transmitted for the transmission of a service (e.g., a service related to a network slice NS1 and/or local area network 2).

The NWDAF also acquires, from the AMF and/or the OAM, geographical distribution information of UEs, to know which cells in which the UEs are located are the cells B corresponding to parameters of the AoI among terminal devices corresponding to the UE IDs.

The NWDAF also collects, from the UPF, information such as a real-time bit rate and a packet delay of the UE, to analyze the UE transmission completion time in real time or predict the UE transmission time completion performance in real time.

**In process 907,** the NWDAF determines an analytics result based on the received input parameter.

**In process 908,** the NWDAF transmits the analytics result to the NF.

The NWDAF transmits Nnwdaf_AnalyticsSubscription_Notify to the NF. The corresponding analytics identity is the UE transmission completion time.

**In process 909a,** in the case that the NWDAF sets a first threshold for the OAM in the process 906, the OAM notifies the NWDA of updated information in response to detecting that the QoS information or geographical distribution information of the UE reaches the first threshold.

**In process 909b,** in the case that the NWDAF sets a second threshold for the AMF in the process 906, the AMF notifies the NWDAF of updated information in response to detecting that the UE enters or leaves an area (e.g., cell B) in which the NF is interested.

**In process 909c,** in the case that the NWDAF sets a third threshold for the AF in the process 906, the AF notifies the NWDAF of updated information in response to detecting that the transmitted data volume reaches the third threshold or changes.

**In process 909d,** in the case that the NWDAF sets a fourth threshold for the UPF in process 906, in response to detecting that the real-time bit rate or packet delay of the UE reaches the fourth threshold, or the real-time bit rate or packet delay of the UE change, the UPF notifies the NWDAF of updated information, that is, acquires data from the UPFs.

**In process 910,** the NWDAF determines an updated analytics result based on the received updated information.

**In process 911,** the NWDAF transmits the updated analytics result to the NF.

The NWDAF transmits Nnwdaf AnalyticsSubscription_Notify to the NF. The corresponding UE transmission information includes at least one of a UE transmission completion time, a UE geographical distribution, a UE transmission time window, or a UE list.

In summary, in the method of the present disclosure, the NWDAF interacts with the NF regarding the analytics request and the analytics result, such that the analytics on the UE transmission information is realized. Moreover, specific and feasible analytics interactive flows of request parameters, analytics result parameters, and input parameters are provided, such that the reliability and operability of the analytics on the UE transmission information are improved.

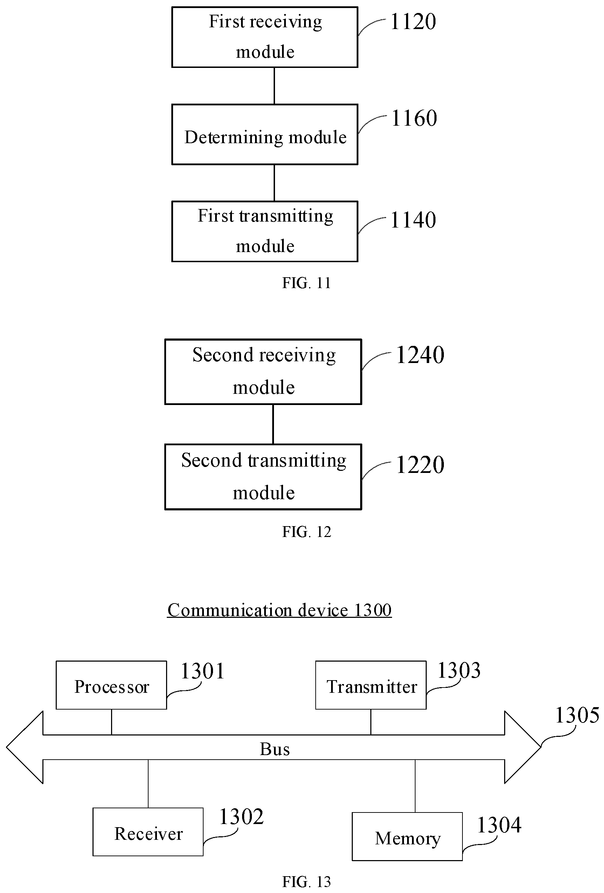

FIG. 11 is a schematic structural diagram of an apparatus for analyzing transmission information according to some exemplary embodiments of the present disclosure. The apparatus comprises at least part of the following modules: a first receiving module 1120, a first transmitting module 1140, and a determining module 1160.

The first receiving module 1120 is configured to receive an analytics request from a first network element. The analytics request is used for requesting to analyze UE transmission information.

The first transmitting module 1140 is configured to transmit an analytics result to the first network element. The analytics result includes the UE transmission information.

In some embodiments, the analytics request is used for requesting to analyze at least one of a UE transmission completion time, a UE geographical distribution, a UE transmission time window, or a UE list.

In some embodiments, the analytics request includes at least one of: an analytics identity; a candidate terminal device; a recommended terminal device; a suggested terminal device; a desired terminal device; the number of desired terminal devices; a terminal device currently in an idle state; the number of terminal devices currently in an idle state; a terminal device currently in a busy state; the number of terminal devices currently in a busy state; a terminal device in an idle state within a first time period; the number of terminal devices in an idle state within a first time period; a terminal device in a busy state within a first time period; the number of terminal devices in a busy state within a first time period; a mean value of time for candidate terminal devices to complete a single transmission; a maximum value of time for completing a single transmission among candidate terminal devices; a minimum value of time for completing a single transmission among candidate terminal devices; a median of time for completing a single transmission among candidate terminal devices; a mean value of time for recommended terminal devices to complete a single transmission; a maximum value of time for completing a single transmission among recommended terminal devices; a minimum value of time for completing a single transmission among recommended terminal devices; a median of time for completing a single transmission among recommended terminal devices; a mean value of time for suggested terminal devices to complete a single transmission; a maximum value of time for completing a single transmission among suggested terminal devices; a minimum value of time for completing a single transmission among suggested terminal devices; a median of time for completing a single transmission among suggested terminal devices; a mean value of time for desired terminal devices to complete a single transmission; a maximum value of time for completing a single transmission among desired terminal devices; a minimum value of time for completing a single transmission among desired terminal devices; a median of time for completing a single transmission among desired terminal devices; an upper limit of time for completing a single transmission; an upper limit of time for completing a transmission of a first data volume; a network slice; a data network name; a transmission service; a type of a transmission service; an AoI; an analytics target time window; a preferred analytics target time window; a desired analytics target time window; a frequency at which the NWDAF is desired to transmit an analytics result; a time at which the NWDAF is desired to transmit an analytics result; the number of times the NWDAF is desired to transmit an analytics result; a frequency at which the NWDAF is instructed to transmit an analytics result; a time at which the NWDAF is instructed to transmit an analytics result; or the number of times the NWDAF is instructed to transmit an analytics result.

In some embodiments, the analytics result includes at least one of: a candidate terminal device; a recommended terminal device; a suggested terminal device; a terminal device currently in an idle state; the number of terminal devices currently in an idle state; a terminal device currently in a busy state; the number of terminal devices currently in a busy state; a terminal device in an idle state within a first time period; the number of terminal devices in an idle state within a first time period; a terminal device in a busy state within a first time period; the number of terminal devices in a busy state within a first time period; time for a terminal device to complete a single transmission; time for a terminal device to complete a transmission of a first data volume; a transmission time window of a terminal device; a start moment of a transmission by a terminal device; an end moment of a transmission by a terminal device; a mean value of time for terminal devices to complete a single transmission within a second time period; a maximum value of time for terminal devices to complete a single transmission within a second time period; a minimum value of time for terminal devices to complete a single transmission within a second time period; a median of time for terminal devices to complete a single transmission within a second time period; a mean value of time for terminal devices to complete a transmission of a first data volume within a second time period; a maximum value of time for terminal devices to complete a transmission of a first data volume within a second time period; a minimum value of time for terminal devices to complete a transmission of a first data volume within a second time period; a median of time for terminal devices to complete a transmission of a first data volume within a second time period; whether a terminal device is currently in an AoI; whether a terminal device is in an AoI within a third time period; an area in which a terminal device is currently located; an area in which a terminal device is located within a third time period; a terminal device below an upper limit of time for completing a single transmission; the number of terminal devices below an upper limit of time for completing a single transmission; a mean value of time for candidate terminal devices to complete a single transmission; a maximum value of time for completing a single transmission among candidate terminal devices; a minimum value of time for completing a single transmission among candidate terminal devices; a median of time for completing a single transmission among candidate terminal devices; a mean value of time for recommended terminal devices to complete a single transmission; a maximum value of time for completing a single transmission among recommended terminal devices; a minimum value of time for completing a single transmission among recommended terminal devices; a median of time for completing a single transmission among recommended terminal devices; a mean value of time for suggested terminal devices to complete a single transmission; a maximum value of time for completing a single transmission among suggested terminal devices; a minimum value of time for completing a single transmission among suggested terminal devices; a median of time for completing a single transmission among suggested terminal devices; a mean value of time for desired terminal devices to complete a single transmission; a maximum value of time for completing a single transmission among desired terminal devices; a minimum value of time for completing a single transmission among desired terminal devices; a median of time for completing a single transmission among desired terminal devices; numbering of the analytics result; or a time window corresponding to the analytics result.

In some embodiments, the determining module 1160 is configured to determine an analytics result based on the input parameter.

In some embodiments, the input parameter includes at least one of: a data volume of a transmission service; a data volume of a single transmission; an area in which a terminal device is located; a cell in which a terminal device is located; a tracking area in which a terminal device is located; an absolute geographical position of a terminal device; a relative geographical position of a terminal device; a capability of a terminal device; a state of a terminal device; transmission information of a terminal device; a transmission bit rate of a terminal device; a transmission rate of a terminal device; a packet delay of a terminal device; transmission information of a terminal device related to a network slice; a transmission bit rate of a terminal device related to a network slice; a transmission rate of a terminal device related to a network slice; a packet delay of a terminal device related to a network slice; transmission information of a terminal device related to a DNN; a transmission bit rate of a terminal device related to a DNN; a transmission rate of a terminal device related to a DNN; a packet delay of a terminal device related to a DNN; transmission information of a terminal device related to a transmission service; a transmission bit rate of a terminal device related to a transmission service; a transmission rate of a terminal device related to a transmission service; a packet delay of a terminal device related to a transmission service; transmission information of a terminal device related to a type of a transmission service; a transmission bit rate of a terminal device related to type of a transmission service; a transmission rate of a terminal device related to type of a transmission service; or a packet delay of a terminal device related to a type of a transmission service.

In some embodiments, the first receiving module 1120 is further configured to receive the input parameter from a second network element.

In some embodiments, the second network element includes at least one of: an operation administration and maintenance function (OAM); a mobility management function (AMF); an application function (AF); a location management function (LMF); or a user plane function (UPF).

In some embodiments, the first transmitting module 1140 is further configured to perform at least one of:

transmitting the analytics result to the first network element at an analytics completion moment; transmitting an updated analytics result to the first network element in the case that the analytics result is updated; periodically transmitting the analytics result to the first network element; semi-periodically transmitting the analytics result to the first network element; or non-periodically transmitting the analytics result to the first network element.

In some embodiments, the first network element includes at least one of: a network exposure function (NEF); or a policy control function (PCF).

In summary, the apparatus according to the embodiment supports receiving an analytics request and transmitting an analytics result, such that the analytics on the UE transmission information is realized. Moreover, the reliability and operability of the analytics on the UE transmission information are improved based on specific and feasible analytics request parameters, analytics result parameters, and input parameters.

FIG. 12 is a schematic structural diagram of an apparatus for analyzing transmission information according to some exemplary embodiments of the present disclosure. The apparatus includes at least part of the following modules: a second transmitting module 1220 and a second receiving module 1240.

The second transmitting module 1220 is configured to transmit an analytics request to NWDAF. The analytics request is used for requesting to analyze UE transmission information.

The second receiving module 1240 is configured to receive an analytics result from the NWDAF. The analytics result includes the UE transmission information.

**In** some embodiments, the analytics request is used for requesting to analyze at least one of a UE transmission completion time, a UE geographical distribution, a UE transmission time window, or a UE list.

**In** some embodiments, the analytics request includes at least one of: an analytics identity; a candidate terminal device; a recommended terminal device; a suggested terminal device; a desired terminal device; the number of desired terminal devices; a terminal device currently in an idle state; the number of terminal devices currently in an idle state; a terminal device currently in a busy state; the number of terminal devices currently in a busy state; a terminal device in an idle state within a first time period; the number of terminal devices in an idle state within a first time period; a terminal device in a busy state within a first time period; the number of terminal devices in a busy state within a first time period; a mean value of time for candidate terminal devices to complete a single transmission; a maximum value of time for completing a single transmission among candidate terminal devices; a minimum value of time for completing a single transmission among candidate terminal devices; a median of time for completing a single transmission among candidate terminal devices; a mean value of time for recommended terminal devices to complete a single transmission; a maximum value of time for completing a single transmission among recommended terminal devices; a minimum value of time for completing a single transmission among recommended terminal devices; a median of time for completing a single transmission among recommended terminal devices; a mean value of time for suggested terminal devices to complete a single transmission; a maximum value of time for completing a single transmission among suggested terminal devices; a minimum value of time for completing a single transmission among suggested terminal devices; a median of time for completing a single transmission among suggested terminal devices; a mean value of time for desired terminal devices to complete a single transmission; a maximum value of time for completing a single transmission among desired terminal devices; a minimum value of time for completing a single transmission among desired terminal devices; a median of time for completing a single transmission among desired terminal devices; an upper limit of time for completing a single transmission; an upper limit of time for completing a transmission of a first data volume; a network slice; a data network name; a transmission service; a type of a transmission service; an AoI; an analytics target time window; a preferred analytics target time window; a desired analytics target time window; a frequency at which the NWDAF is desired to transmit an analytics result; a time at which the NWDAF is desired to transmit an analytics result; the number of times the NWDAF is desired to transmit an analytics result; a frequency at which the NWDAF is instructed to transmit an analytics result; a time at which the NWDAF is instructed to transmit an analytics result; or the number of times the NWDAF is instructed to transmit an analytics result.

In some embodiments, the analytics result includes at least one of: a candidate terminal device; a recommended terminal device; a suggested terminal device; a terminal device currently in an idle state; the number of terminal devices currently in an idle state; a terminal device currently in a busy state; the number of terminal devices currently in a busy state; a terminal device in an idle state within a first time period; the number of terminal devices in an idle state within a first time period; a terminal device in a busy state within a first time period; the number of terminal devices in a busy state within a first time period; time for a terminal device to complete a single transmission; time for a terminal device to complete a transmission of a first data volume; a transmission time window of a terminal device; a start moment of a transmission by a terminal device; an end moment of a transmission by a terminal device; a mean value of time for terminal devices to complete a single transmission within a second time period; a maximum value of time for terminal devices to complete a single transmission within a second time period; a minimum value of time for terminal devices to complete a single transmission within a second time period; a median of time for terminal devices to complete a single transmission within a second time period; a mean value of time for terminal devices to complete a transmission of a first data volume within a second time period; a maximum value of time for terminal devices to complete a transmission of a first data volume within a second time period; a minimum value of time for terminal devices to complete a transmission of a first data volume within a second time period; a median of time for terminal devices to complete a transmission of a first data volume within a second time period; whether a terminal device is currently in an AoI; whether a terminal device is in an AoI within a third time period; an area in which a terminal device is currently located; an area in which a terminal device is located within a third time period; a terminal device below an upper limit of time for completing a single transmission; the number of terminal devices below an upper limit of time for completing a single transmission; a mean value of time for candidate terminal devices to complete a single transmission; a maximum value of time for completing a single transmission among candidate terminal devices; a minimum value of time for completing a single transmission among candidate terminal devices; a median of time for completing a single transmission among candidate terminal devices; a mean value of time for recommended terminal devices to complete a single transmission; a maximum value of time for completing a single transmission among recommended terminal devices; a minimum value of time for completing a single transmission among recommended terminal devices; a median of time for completing a single transmission among recommended terminal devices; a mean value of time for suggested terminal devices to complete a single transmission; a maximum value of time for completing a single transmission among suggested terminal devices; a minimum value of time for completing a single transmission among suggested terminal devices; a median of time for completing a single transmission among suggested terminal devices; a mean value of time for desired terminal devices to complete a single transmission; a maximum value of time for completing a single transmission among desired terminal devices; a minimum value of time for completing a single transmission among desired terminal devices; a median of time for completing a single transmission among desired terminal devices; numbering of the analytics result; or a time window corresponding to the analytics result.

In some embodiments, the analytics result is determined based on an input parameter.

In some embodiments, the input parameter includes at least one of: a data volume of a transmission service; a data volume of a single transmission; an area in which a terminal device is located; a cell in which a terminal device is located; a tracking area in which a terminal device is located; an absolute geographical position of a terminal device; a relative geographical position of a terminal device; a capability of a terminal device; a state of a terminal device; transmission information of a terminal device; a transmission bit rate of a terminal device; a transmission rate of a terminal device; a packet delay of a terminal device; transmission information of a terminal device related to a network slice; a transmission bit rate of a terminal device related to a network slice; a transmission rate of a terminal device related to a network slice; a packet delay of a terminal device related to a network slice; transmission information of a terminal device related to a DNN; a transmission bit rate of a terminal device related to a DNN; a transmission rate of a terminal device related to a DNN; a packet delay of a terminal device related to a DNN; transmission information of a terminal device related to a transmission service; a transmission bit rate of a terminal device related to a transmission service; a transmission rate of a terminal device related to a transmission service; a packet delay of a terminal device related to a transmission service; transmission information of a terminal device related to a type of a transmission service; a transmission bit rate of a terminal device related to a type of a transmission service; a transmission rate of a terminal device related to a type of a transmission service; or a packet delay of a terminal device related to type of a transmission service.

In some embodiments, the input parameter is transmitted to the NWDAF by a second network element.

In some embodiments, the second network element includes at least one of: an OAM, an AMF, an AF, an LMF, or a UPF.

In some embodiments, the second receiving module 1240 is configured to perform at least one of:

receiving an analytics result from the NWDAF at an analytics completion moment; receiving an analytics result from the NWDAF in the case that the analytics result is updated; receiving an analytics result periodically from the NWDAF; receiving an analytics result semi-periodically from the NWDAF; or receiving an analytics result non-periodically from the NWDAF.

In some embodiments, the second transmitting module 1220 is further configured to transmit, based on the analytics result, artificial intelligence AI operation assistance information to a third network element.

In some embodiments, the AI operation assistance information includes at least one of: a candidate AI operation terminal device; a recommended AI operation terminal device; a suggested AI operation terminal device; the number of candidate AI operation terminal devices; the number of recommended AI operation terminal devices; the number of suggested AI operation terminal devices; a candidate AI operation time window; a recommended AI operation time window; or a suggested AI operation time window.

In some embodiments, the third network element includes an AF.

In some embodiments, the first network element includes at least one of an NEF or a PCF.

In summary, the apparatus according to the present disclosure supports transmitting an analytics request and receiving an analytics result, such that the analytics on the UE transmission information is realized. Moreover, the reliability and operability of the analytics on the UE transmission information are improved based on specific and feasible analytics request parameters, analytics result parameters, and input parameters.

It should be noted that, for the apparatus according to the embodiments described above, the division of the functional modules is merely exemplary. In practice, the functions described above may be assigned to different functional modules as needed, that is, the internal structure of the device may be divided into different functional modules, such that all or a part of the above functions are implemented.

Regarding to the apparatus according to the embodiments, the specific manner in which each module performs operations has been described in detail in the embodiments related to the method and is not described in detail herein.

FIG. 13 shows a schematic structural diagram of a communication device (a terminal device or a network device) according to some exemplary embodiments of the present disclosure. The communication device 1300 includes: a processor 1301, a receiver 1302, a transmitter 1303, a memory 1304, and a bus 1305.

The processor 1301 includes one or more processing cores, and the processor 1301 runs various functional applications and performs information processing by running software programs and modules. In some embodiments, the processor 1301 is configured to implement the functions and processes of the determining module 1160 described above.

The receiver 1302 and the transmitter 1303 may be implemented as a communication assembly, which may be a communication chip. In some embodiments, the receiver 1302 is configured to implement the functions and processes of the first receiving module 1020 and/or the second receiving module 1140 as described above. In some embodiments, the transmitter 1303 is configured to implement the functions and processes of the first transmitting module 1140 and/or the second transmitting module 1220 as described above.

The memory 1304 is connected to the processor 1301 via the bus 1305. The memory 1304 is configured to store at least one instruction, and the processor 1301 is configured to execute the at least one instruction to perform the processes in the above method embodiments.

In addition, the memory 1304 may be practiced by any type of volatile or non-volatile storage devices or a combination thereof. The volatile or non-volatile storage device includes but is not limited to: a magnetic or optical disk, an electrically erasable programmable read-only memory (EEPROM), an erasable programmable read-only memory (EPROM), a static random access memory (SRAM), a read-only memory (ROM), a magnetic memory, a flash memory, or a programmable read-only memory (PROM).

In some embodiments, the receiver 1302 independently receives signals/data, or the processor 1301 controls the receiver 1302 to receive signals/data, or the processor 1301 requests the receiver 1302 to receive signals/data, or the processor 1301 cooperates with the receiver 1302 to receive signals/data.

In some embodiments, the transmitter 1303 independently transmits signals/data, or the processor 1301 controls the transmitter 1303 to transmit signals/data, or the processor 1301 requests the transmitter 1303 to transmit signals/data, or the processor 1301 cooperates with the transmitter 1303 to transmit signals/data.

In some exemplary embodiments of the present disclosure, a computer-readable storage medium is further provided. The computer-readable storage medium stores at least one program. The at least one program, when loaded and run by a processor, causes the processor to perform the method for analyzing transmission information provided by the method embodiments described above.

In an exemplary embodiment of the present disclosure, a chip is further provided. The chip includes one or more programmable logic circuits and/or one or more program instructions. The chip, when run on the communication device, is caused to perform the method for analyzing transmission information provided by the method embodiments described above.

In an exemplary embodiment of the present disclosure, a computer program product is further provided. The computer program product, when run on a processor of a computer device, causes the computer device to perform the method for analyzing transmission information described above.

In an exemplary embodiment of the present disclosure, a computer program is further provided. The computer program includes one or more computer instructions. The one or more computer instructions, when executed by a processor of a computer device, cause the computer device to perform the method for analyzing transmission information described above.

Those skilled in the art should understand that in one or more of the above embodiments, the functions described in the embodiments of the present disclosure may be implemented in hardware, software, firmware, or any combination thereof. The functions, when implemented in software, are stored in a computer-readable medium or transmitted as one or more instructions or codes on the computer-readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

Described above are merely optional embodiments of the present disclosure and are not intended to limit the present disclosure. Any modifications, equivalent substitutions, improvements, and the like, made within the spirit and principle of the present disclosure should fall within the protection scope of the present disclosure.

## Claims

1. A method for analyzing transmission information, applicable to a network data analytics function (NWDAF), the method comprising:
receiving an analytics request from a first network element, wherein the analytics request is used for requesting to analyze user equipment (UE) transmission information of a terminal device; and
transmitting an analytics result to the first network element, wherein the analytics result comprises the UE transmission information.

2. The method according to claim 1, wherein the analytics request is used for requesting to analyze at least one of a UE transmission completion time, a UE geographical distribution, a UE transmission time window, or a UE list.

3. The method according to claim 1 or 2, wherein the analytics request comprises at least one of:
an analytics identity; a candidate terminal device; a recommended terminal device; a suggested terminal device; a desired terminal device; a number of desired terminal devices; a terminal device currently in an idle state; a number of terminal devices currently in an idle state; a terminal device currently in a busy state; a number of terminal devices currently in a busy state; a terminal device in an idle state within a first time period; a number of terminal devices in an idle state within a first time period; a terminal device in a busy state within a first time period; a number of terminal devices in a busy state within a first time period; a mean value of time for candidate terminal devices to complete a single transmission; a maximum value of time for completing a single transmission among candidate terminal devices; a minimum value of time for completing a single transmission among candidate terminal devices; a median of time for completing a single transmission among candidate terminal devices; a mean value of time for recommended terminal devices to complete a single transmission; a maximum value of time for completing a single transmission among recommended terminal devices; a minimum value of time for completing a single transmission among recommended terminal devices; a median of time for completing a single transmission among recommended terminal devices; a mean value of time for suggested terminal devices to complete a single transmission; a maximum value of time for completing a single transmission among suggested terminal devices; a minimum value of time for completing a single transmission among suggested terminal devices; a median of time for completing a single transmission among suggested terminal devices; a mean value of time for desired terminal devices to complete a single transmission; a maximum value of time for completing a single transmission among desired terminal devices; a minimum value of time for completing a single transmission among desired terminal devices; a median of time for completing a single transmission among desired terminal devices; an upper limit of time for completing a single transmission; an upper limit of time for completing a transmission of a first data volume; a network slice; a data network name (DNN); a transmission service; a type of a transmission service; an area of interest (AoI); an analytics target time window; a preferred analytics target time window; a desired analytics target time window; a frequency at which the NWDAF is desired to transmit an analytics result; a time at which the NWDAF is desired to transmit an analytics result; a number of times the NWDAF is desired to transmit an analytics result; a frequency at which the NWDAF is instructed to transmit an analytics result; a time at which the NWDAF is instructed to transmit an analytics result; or a number of times the NWDAF is instructed to transmit an analytics result.

4. The method according to any one of claims 1 to 3, wherein the analytics result comprises at least one of:
a candidate terminal device; a recommended terminal device; a suggested terminal device; a terminal device currently in an idle state; a number of terminal devices currently in an idle state; a terminal device currently in a busy state; a number of terminal devices currently in a busy state; a terminal device in an idle state within a first time period; a number of terminal devices in an idle state within a first time period; a terminal device in a busy state within a first time period; a number of terminal devices in a busy state within a first time period; time for a terminal device to complete a single transmission; time for a terminal device to complete a transmission of a first data volume; a transmission time window of a terminal device; a start moment of a transmission by a terminal device; an end moment of a transmission by a terminal device; a mean value of time for terminal devices to complete a single transmission within a second time period; a maximum value of time for terminal devices to complete a single transmission within a second time period; a minimum value of time for terminal devices to complete a single transmission within a second time period; a median of time for terminal devices to complete a single transmission within a second time period; a mean value of time for terminal devices to complete a transmission of a first data volume within a second time period; a maximum value of time for terminal devices to complete a transmission of a first data volume within a second time period; a minimum value of time for terminal devices to complete a transmission of a first data volume within a second time period; a median of time for terminal devices to complete a transmission of a first data volume within a second time period; whether a terminal device is currently in an area of interest (AoI); whether a terminal device is in an AoI within a third time period; an area in which a terminal device is currently located; an area in which a terminal device is located within a third time period; a terminal device below an upper limit of time for completing a single transmission; a number of terminal devices below an upper limit of time for completing a single transmission; a mean value of time for candidate terminal devices to complete a single transmission; a maximum value of time for completing a single transmission among candidate terminal devices; a minimum value of time for completing a single transmission among candidate terminal devices; a median of time for completing a single transmission among candidate terminal devices; a mean value of time for recommended terminal devices to complete a single transmission; a maximum value of time for completing a single transmission among recommended terminal devices; a minimum value of time for completing a single transmission among recommended terminal devices; a median of time for completing a single transmission among recommended terminal devices; a mean value of time for suggested terminal devices to complete a single transmission; a maximum value of time for completing a single transmission among suggested terminal devices; a minimum value of time for completing a single transmission among suggested terminal devices; a median of time for completing a single transmission among suggested terminal devices; a mean value of time for desired terminal devices to complete a single transmission; a maximum value of time for completing a single transmission among desired terminal devices; a minimum value of time for completing a single transmission among desired terminal devices; a median of time for completing a single transmission among desired terminal devices; numbering of the analytics result; or a time window corresponding to the analytics result.

5. The method according to any one of claims 1 to 4, wherein the analytics result is determined based on an input parameter.

6. The method according to claim 5, wherein the input parameter comprises at least one of:
a data volume of a transmission service; a data volume of a single transmission; an area in which a terminal device is located; a cell in which a terminal device is located; a tracking area in which a terminal device is located; an absolute geographical position of a terminal device; a relative geographical position of a terminal device; a capability of a terminal device; a state of a terminal device; transmission information of a terminal device; a transmission bit rate of a terminal device; a transmission rate of a terminal device; a packet delay of a terminal device; transmission information of a terminal device related to a network slice; a transmission bit rate of a terminal device related to a network slice; a transmission rate of a terminal device related to a network slice; a packet delay of a terminal device related to a network slice; transmission information of a terminal device related to a data network name (DNN); a transmission bit rate of a terminal device related to a DNN; a transmission rate of a terminal device related to a DNN; a packet delay of a terminal device related to a DNN; transmission information of a terminal device related to a transmission service; a transmission bit rate of a terminal device related to a transmission service; a transmission rate of a terminal device related to a transmission service; a packet delay of a terminal device related to a transmission service; transmission information of a terminal device related to a type of a transmission service; a transmission bit rate of a terminal device related to a type of a transmission service; a transmission rate of a terminal device related to a type of a transmission service; or a packet delay of a terminal device related to a type of a transmission service.

7. The method according to claim 5 or 6, further comprising:
receiving the input parameter from a second network element.

8. The method according to claim 7, wherein the second network element comprises at least one of:
an operation administration and maintenance function (OAM), an access and mobility management function (AMF), an application function (AF), a location management function (LMF), or a user plane function (UPF).

9. The method according to any one of claims 1 to 8, wherein transmitting the analytics result to the first network element comprises at least one of:
transmitting the analytics result to the first network element at an analytics completion moment;
in a case that the analytics result is updated, transmitting an updated analytics result to the first network element;
periodically transmitting the analytics result to the first network element;
semi-periodically transmitting the analytics result to the first network element; or
non-periodically transmitting the analytics result to the first network element.

10. The method according to any one of claims 1 to 9, wherein the first network element comprises at least one of a network exposure function (NEF) or a policy control function (PCF).

11. A method for analyzing transmission information, applicable to a first network element, the method comprising:
transmitting an analytics request to a network data analytics function (NWDAF), wherein the analytics request is used for requesting to analyze user equipment (UE) transmission information of a terminal device; and
receiving an analytics result from the NWDAF, wherein the analytics result comprises the UE transmission information.

12. The method according to claim 11, wherein the analytics request is used for requesting to analyze at least one of a UE transmission completion time, a UE geographical distribution, a UE transmission time window, or a UE list.

13. The method according to claim 11 or 12, wherein the analytics request comprises at least one of:
an analytics identity; a candidate terminal device; a recommended terminal device; a suggested terminal device; a desired terminal device; a number of desired terminal devices; a terminal device currently in an idle state; a number of terminal devices currently in an idle state; a terminal device currently in a busy state; a number of terminal devices currently in a busy state; a terminal device in an idle state within a first time period; a number of terminal devices in an idle state within a first time period; a terminal device in a busy state within a first time period; a number of terminal devices in a busy state within a first time period; a mean value of time for candidate terminal devices to complete a single transmission; a maximum value of time for completing a single transmission among candidate terminal devices; a minimum value of time for completing a single transmission among candidate terminal devices; a median of time for completing a single transmission among candidate terminal devices; a mean value of time for recommended terminal devices to complete a single transmission; a maximum value of time for completing a single transmission among recommended terminal devices; a minimum value of time for completing a single transmission among recommended terminal devices; a median of time for completing a single transmission among recommended terminal devices; a mean value of time for suggested terminal devices to complete a single transmission; a maximum value of time for completing a single transmission among suggested terminal devices; a minimum value of time for completing a single transmission among suggested terminal devices; a median of time for completing a single transmission among suggested terminal devices; a mean value of time for desired terminal devices to complete a single transmission; a maximum value of time for completing a single transmission among desired terminal devices; a minimum value of time for completing a single transmission among desired terminal devices; a median of time for completing a single transmission among desired terminal devices; an upper limit of time for completing a single transmission; an upper limit of time for completing a transmission of a first data volume; a network slice; a data network name (DNN); a transmission service; a type of a transmission service; an area of interest (AoI); an analytics target time window; a preferred analytics target time window; a desired analytics target time window; a frequency at which the NWDAF is desired to transmit an analytics result; a time at which the NWDAF is desired to transmit an analytics result; a number of times the NWDAF is desired to transmit an analytics result; a frequency at which the NWDAF is instructed to transmit an analytics result; a time at which the NWDAF is instructed to transmit an analytics result; or a number of times the NWDAF is instructed to transmit an analytics result.

14. The method according to any one of claims 11 to 13, wherein the analytics result comprises at least one of:
a candidate terminal device; a recommended terminal device; a suggested terminal device; a terminal device currently in an idle state; a number of terminal devices currently in an idle state; a terminal device currently in a busy state; a number of terminal devices currently in a busy state; a terminal device in an idle state within a first time period; a number of terminal devices in an idle state within a first time period; a terminal device in a busy state within a first time period; a number of terminal devices in a busy state within a first time period; time for a terminal device to complete a single transmission; time for a terminal device to complete a transmission of a first data volume; a transmission time window of a terminal device; a start moment of a transmission by a terminal device; an end moment of a transmission by a terminal device; a mean value of time for terminal devices to complete a single transmission within a second time period; a maximum value of time for terminal devices to complete a single transmission within a second time period; a minimum value of time for terminal devices to complete a single transmission within a second time period; a median of time for terminal devices to complete a single transmission within a second time period; a mean value of time for terminal devices to complete a transmission of a first data volume within a second time period; a maximum value of time for terminal devices to complete a transmission of a first data volume within a second time period; a minimum value of time for terminal devices to complete a transmission of a first data volume within a second time period; a median of time for terminal devices to complete a transmission of a first data volume within a second time period; whether a terminal device is currently in an area of interest (AoI); whether a terminal device is in an AoI within a third time period; an area in which a terminal device is currently located; an area in which a terminal device is located within a third time period; a terminal device below an upper limit of time for completing a single transmission; a number of terminal devices below an upper limit of time for completing a single transmission; a mean value of time for candidate terminal devices to complete a single transmission; a maximum value of time for completing a single transmission among candidate terminal devices; a minimum value of time for completing a single transmission among candidate terminal devices; a median of time for completing a single transmission among candidate terminal devices; a mean value of time for recommended terminal devices to complete a single transmission; a maximum value of time for completing a single transmission among recommended terminal devices; a minimum value of time for completing a single transmission among recommended terminal devices; a median of time for completing a single transmission among recommended terminal devices; a mean value of time for suggested terminal devices to complete a single transmission; a maximum value of time for completing a single transmission among suggested terminal devices; a minimum value of time for completing a single transmission among suggested terminal devices; a median of time for completing a single transmission among suggested terminal devices; a mean value of time for desired terminal devices to complete a single transmission; a maximum value of time for completing a single transmission among desired terminal devices; a minimum value of time for completing a single transmission among desired terminal devices; a median of time for completing a single transmission among desired terminal devices; numbering of the analytics result; or a time window corresponding to the analytics result.

15. The method according to any one of claims 11 to 14, wherein the analytics result is determined based on an input parameter.

16. The method according to claim 15, wherein the input parameter comprises at least one of:
a data volume of a transmission service; a data volume of a single transmission; an area in which a terminal device is located; a cell in which a terminal device is located; a tracking area in which a terminal device is located; an absolute geographical position of a terminal device; a relative geographical position of a terminal device; a capability of a terminal device; a state of a terminal device; transmission information of a terminal device; a transmission bit rate of a terminal device; a transmission rate of a terminal device; a packet delay of a terminal device; transmission information of a terminal device related to a network slice; a transmission bit rate of a terminal device related to a network slice; a transmission rate of a terminal device related to a network slice; a packet delay of a terminal device related to a network slice; transmission information of a terminal device related to a data network name (DNN); a transmission bit rate of a terminal device related to a DNN; a transmission rate of a terminal device related to a DNN; a packet delay of a terminal device related to a DNN; transmission information of a terminal device related to a transmission service; a transmission bit rate of a terminal device related to a transmission service; a transmission rate of a terminal device related to a transmission service; a packet delay of a terminal device related to a transmission service; transmission information of a terminal device related to a type of a transmission service; a transmission bit rate of a terminal device related to a type of a transmission service; a transmission rate of a terminal device related to a type of a transmission service; or a packet delay of a terminal device related to a type of a transmission service.

17. The method according to claim 15 or 16, wherein the input parameter is transmitted to the NWDAF by a second network element.

18. The method according to claim 17, wherein the second network element comprises at least one of:
an operation administration and maintenance (OAM) function, an access and mobility management function (AMF), an application function (AF), a location management function (LMF), or a user plane function (UPF).

19. The method according to any one of claims 11 to 18, wherein receiving the analytics result from the NWDAF comprises at least one of:
receiving the analytics result from the NWDAF at an analytics completion moment;
receiving the analytics result from the NWDAF in the case that the analytics result is updated;
receiving the analytics result periodically from the NWDAF;
receiving the analytics result semi-periodically from the NWDAF; or
receiving the analytics result non-periodically from the NWDAF.

20. The method according to any one of claims 11 to 19, further comprising:
transmitting artificial intelligence (AI) operation assistance information to a third network element based on the analytics result.

21. The method according to claim 20, wherein the AI operation assistance information comprises at least one of:
a candidate AI operation terminal device; a recommended AI operation terminal device; a suggested AI operation terminal device; a number of candidate AI operation terminal devices; a number of recommended AI operation terminal devices; a number of suggested AI operation terminal devices; a candidate AI operation time window; a recommended AI operation time window; or a suggested AI operation time window.

22. The method according to claim 20 or 21, wherein the third network element comprises an application function (AF).

23. The method according to any one of claims 11 to 22, wherein the first network element comprises at least one of: a network exposure function (NEF) or a policy control function (PCF).

24. An apparatus for analyzing transmission information, comprising:
a first receiving module, configured to receive an analytics request from a first network element, wherein the analytics request is used for requesting to analyze user equipment (UE) transmission information; and
a first transmitting module, configured to transmit an analytics result to the first network element, wherein the analytics result comprises the UE transmission information.

25. An apparatus for analyzing transmission information, comprising:
a second transmitting module, configured to transmit an analytics request to a network data analytics function (NWDAF), wherein the analytics request is used for requesting to analyze user equipment (UE) transmission information; and
a second receiving module, configured to receive an analytics result from the NWDAF, wherein the analytics result comprises the UE transmission information.

26. A communication device, comprising:
a processor;
a transceiver, communicably connected to the processor; and
a memory, configured to store one or more executable instructions;
wherein the processor, when loading and executing the one or more executable instructions, is caused to perform the method for analyzing the transmission information as defined in any one of claims 1 to 10 or claims 11 to 23.

27. A computer-readable storage medium, storing one or more executable instructions therein, wherein the one or more executable instructions, when loaded and executed by a processor, cause the processor to perform the method for analyzing the transmission information as defined in any one of claims 1 to 10 or claims 11 to 23.

28. A chip, comprising one or more programmable logic circuits or one or more programs, wherein the chip is configured to perform the method for analyzing the transmission information as defined in any one of claims 1 to 10 or claims 11 to 23.

29. A computer program product, comprising one or more computer instructions stored in a computer-readable storage medium, wherein the one or more computer instructions, when read from the computer-readable storage medium and loaded and executed by a processor of a computer device, cause the computer device to perform the method for analyzing the transmission information as defined in any one of claims 1 to 10 or claims 11 to 23.

30. A computer program, comprising one or more computer instructions, wherein the one or more computer instructions, when loaded and executed by a processor of a computer device, cause the computer device to perform the method for analyzing the transmission information as defined in any one of claims 1 to 10 or claims 11 to 23.
